# EUROPÄISCHE PATENTSCHRIFT

(11) **EP 1 096 192 B1**
(45) Veröffentlichungstag und Bekanntmachung des Hinweises auf die Patenterteilung: **28.12.2005**
(21) Anmeldenummer: 00810842.5
(22) Anmeldetag: 18.09.2000
(51) Int. Cl.: F16L 21/00, F16L 21/06

(54) **Spannverbinder zur Axialverbindung zweier Rohre**
Clamping connector for axially joining two pipes
Dispositif de serrage pour la connection axiale de deux tuyaux

(30) Priorität: 01.11.1999 CH 199299
(43) Veröffentlichungstag der Anmeldung: 02.05.2001
(73) Patentinhaber: GEBERIT TECHNIK AG, 8645 Jona (CH)
(72) Erfinder: Schuster, Alexander, 8645 Jona (CH)
(74) Vertreter: Groner, Manfred

(56) Entgegenhaltungen:
- CH-A- 536 440
- DE-U- 8 909 973

## Beschreibung

Die Erfindung betrifft einen Spannverbinder zur Axialverbindung zweier Rohre gemäss Oberbegriff des Anspruchs 1.

Die DE 89 09 973 U offenbart einen Spannverbinder dieser Art. Dieser besitzt eine Spannschelle, die an ihren Enden mit einer Spannvorrichtung zusammengehalten ist. Die Spannvorrichtung besitzt zwei Klemmbacken, die jeweils einen Absatz für eine Spannschraube besitzen.

Die CH 536 440 A offenbart einen Spannverbinder, bei dem an den beiden Enden je ein Spannsteg angeformt ist. Die beiden Spannstege besitzen jeweils zwei Bohrungen für die Aufnahme von Spannschrauben.

Ein weiterer Spannverbinder ist aus der DE 35 01 583 C bekannt geworden. Dieser Spannverbinder dient dazu, stumpf aneinandergrenzende muffenlose Rohre dicht miteinander zu verbinden. In einer Spannschelle ist eine mit radial nach innen ragenden Dichtlippen versehene Gummimanschette eingelegt. Mit einer Spannschraube wird diese Spannschelle an ihren Enden gespannt, wobei die Gummimanschette mit ihren Dichtlippen an die Aussenfläche der beiden Rohre angepresst wird. Die Spannschraube erstreckt sich tangential zum Umfang der Spannschelle und durchsetzt zwei Stangenabschnitte, die jeweils in ein Schlaufenband eingelegt sind. Diese Schlaufenbänder sind mittels Punktschweissung mit einem Band der Spannschelle verbunden. Solche Spannschellen müssen einfach und schnell montierbar sein. Sie sollen aber trotzdem serienmässig kostengünstig herstellbar sein und eine dauerhafte Verbindung gewährleisten.

Der Erfindung liegt die Aufgabe zugrunde, einen Spannverbinder der genannten Art zu schaffen, der wesentlich kostengünstiger und mit weniger Teilen herstellbar ist. Der Spannverbinder soll trotzdem einfach montierbar und funktionssicher sein.

Die Aufgabe ist bei einem gattungsgemässen Spannverbinder gemäss Anspruch 1 gelöst. Der erfindungsgemässe Spannverbinder lässt sich aus lediglich fünf einfachen und robusten Teilen herstellen. Vergleichsweise aufwändige Arbeitsschritte, wie beispielsweise Punktschweissungen sind nicht erforderlich.

Die Herstellung ist dann besonders kostengünstig, wenn der Schraubschaft gemäss einer Weiterbildung der Erfindung durch Verstemmen gebildet ist. Zum Verstemmen lässt sich in einem Arbeitsgang ein Schraubschaft mit einem Gewindeloch für die Spannschraube herstellen. Die beiden Klemmbacken können separat und sehr kostengünstig aus Blechteilen hergestellt werden. Mit solchen Klemmbacken ist es möglich, die Spannschelle auf ihrer ganzen Breite zu spannen. Es lässt sich damit durch eine so genannte Breitbandschelle mit hohen Anforderungen an die Dichtigkeit herstellen.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Figur 1: eine räumliche Ansicht eines erfindungsgemässen Spannverbinders,
- Figur 2: eine räumliche Ansicht eines Teils des Spannverbinders gemäss Figur 1,
- Figur 3: eine Ansicht des Spannverbinders und
- Figur 4: eine weitere Ansicht des Spannverbinders.

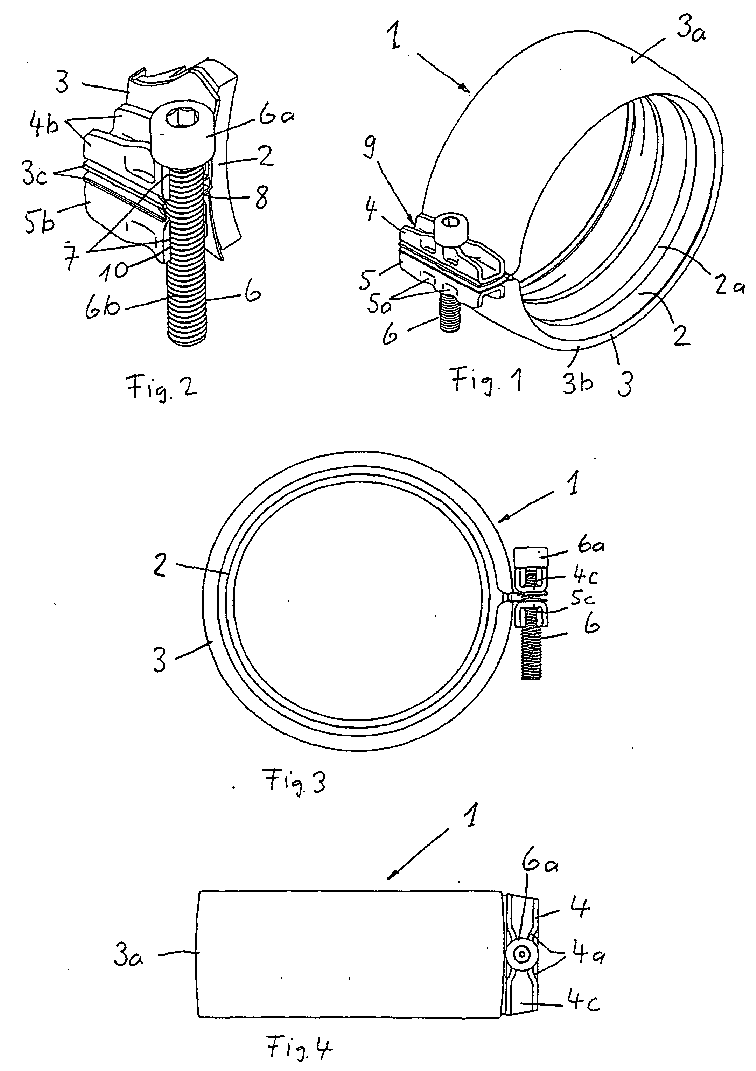

Der Spannverbinder 1 weist eine Gummimanschette 2 mit radial nach innen vorspringenden Dichtlippen 2a auf, die in eine Spannschelle 3 eingelegt ist. Radial nach innen ragende Ränder 3b der Spannschelle 3 sowie eine bombierte Mantelfläche 3a (Figur 4) gewährleisten einen sicheren Sitz der Gummimanschette 2 in der Spannschelle 3.

Die Spannschelle 3 ist aus einem Band, insbesondere einem Metallband hergestellt und weist an ihren beiden Enden zwei abgewinkelte Laschen 3c auf, die etwa mittig zwei Durchgangslöcher 8 aufweist, wie die Figur 2 erkennen lässt. Die sich radial nach aussen erstreckenden Laschen 3c erstrecken sich axial im wesentlichen über die gesamte Breite der Spannschelle 3. An diesen beiden Laschen 3c wird die Spannschelle 3 mittels einer Spannvorrichtung 9 gespannt und geschlossen. Diese Spannvorrichtung 9 besteht aus zwei Klemmbacken 4 und 5 sowie einer Spannschraube 6, die einen Schraubenkopf 6a sowie einen Schraubschaft 6b aufweist.

Die beiden Klemmbacken 4 und 5 sind aus ausgestanzten Blechteilen durch Umbiegen und Verstemmen hergestellt. Im Querschnitt sind diese beiden Klemmbacken 4 und 5 im wesentlichen U-förmig und weisen jeweils einen streifenförmigen Klemmbereich 4c bzw. 5c sowie zwei rechtwinklig abgebogene Flanken 4b bzw. 5b auf. In diese Flanken 4b bzw. 5b ist durch Verstemmen ein Schraubschaft 7 gebildet. Im Bereich der Klemmbacke 5 bildet dieser Schraubschaft 7 ein Innengewinde 10, in das die Spannschraube 6 eingeschraubt ist. Beim Verstemmen werden in die Flanken 4b und 5b jeweils vier Vertiefungen 4a bzw. 5a eingearbeitet. Durch diese Vertiefungen 4a und 5a sind die Flanken 4b und 5b mittig verengt, wie die Figur 4 deutlich erkennen lässt. Diese Deformation der Flanken verleiht den beiden Klemmbakken 4 und 5 eine hohe Stabilität und bei der Klemmbacke 4 wird für den Spannschraubkopf 6b eine Auflage geschaffen. Die Flanken 4b und 5b verteilen die Spannkraft über die gesamte Breite der Klemmbereiche 4c und 5c und gewährleisten damit eine zuverlässige Klemmung.

Die Spannvorrichtung 9 ist vormontiert und zum Verbinden von zwei hier nicht gezeigten Rohren wird die Spannschraube 6 zum entsprechenden Aufweiten der Spannschelle 3 etwas herausgeschraubt. Die zu verbindenden Rohre werden in den Spannverbinder 1 von entgegengesetzten Seiten eingeschoben und stumpf aneinandergelegt. Durch Eindrehen der Spannschraube 6 wird der Durchmesser des Spannverbinders 1 verkleinert und damit die Gummimanschette 2 an die Aussenseiten der beiden Rohre angepresst.

## Patentansprüche

1. Spannverbinder zur Axialverbindung zweier Rohre, mit einer Gummimanschette (2) und einer diese umgebenden Spannschelle (3), die an ihren beiden Enden mit einer Spannvorrichtung (9) versehen ist, welche eine Spannschraube (6) aufweist, die mit einem Gewindeabschnitt (6b) ein Querloch (8) der Spannschelle (3) durchsetzt, wobei die Spannvorrichtung (9) zwei Klemmbacken (4, 5) aufweist und abgebogene Laschen (3c) der Spannschelle (3) zwischen diese beiden Klemmbacken (4, 5) eingreifen und die Klemmbacken (4, 5) im Querschnitt im Wesentlichen U-förmig ausgebildet sind, **dadurch gekennzeichnet, dass** durch Verformung (4a, 5a) der Flanken (4b, 5b) der Klemmbacken (4, 5) ein Schraubschaft (7) für die Spannschraube (6) gebildet ist.

2. Spannverbinder nach Anspruch 1, **dadurch gekennzeichnet, dass** der Schraubschaft (7) durch Verstemmen gebildet ist.

3. Spannverbindung nach Anspruch 1 oder 2, **dadurch gekennzeichnet, dass** der Schraubschaft (7) aus einem glatten Durchgangsloch in der einen Klemmbacke (4) und einem Gewindeloch (10) in der anderen Klemmbacke (5) gebildet ist.

4. Spannverbinder nach einem der Ansprüche 1 bis 3, **dadurch gekennzeichnet, dass** die beiden abgebogenen Laschen (3c) etwa mittig jeweils ein Durchgangsloch (8) aufweisen, die von der Spannschraube (6) durchsetzt sind.

5. Spannschraube nach Anspruch 4, **dadurch gekennzeichnet, dass** die beiden Klemmbacken (4, 5) umgebogene und insbesondere verstemmte Blechteile sind und dass sie jeweils einen streifenförmigen Klemmbereich (4c, 5c) aufweisen, der sich im Wesentlichen über die gesamte Breite der Spannschelle (3) erstreckt.

6. Spannverbinder nach einem der Ansprüche 1 bis 6, **dadurch gekennzeichnet, dass** der Kopf (6a) der Spannschraube (6) an mittig verengten Flanken (4b) abgestützt ist.

## Claims

1. A clamping connector for axial connection of two tubes, with a rubber collar (2) and clamp (3) surrounding the said rubber collar, the said clamp (3) being provided at both or its ends with a clamping arrangement (9) which has a tensioning screw (6) with a threaded section (6b) carrying through a lateral hole (8) in the clamp (3), wherein the clamping arrangement (9) has two clamping jaws (4, 5) and bent tabs (3c) of the clamp (3) project between these clamping jaws (4, 5) and wherein the clamping jaws (4, 5) are essentially U-shaped in cross-section, **characterized in that** a screw stock (7) for the tensioning screw (6) is formed in the sides by deformation.

2. A clamping connector according to Claim 1, **characterised in that** the screw stock (7) is formed by pressing.

3. A clamping connector according to either one of Claims 1 and 2, **characterised in that** the screw stock (7) is formed from a smooth through-hole in one clamping jaw (4) and a tapped hole (10) in the other clamping jaw (5).

4. A clamping connector according to any one of Claims 1 to 3, **characterised in that** the two bent tabs (3c) each have an approximately central through-hole (8), through which the tensioning screw (6) passes.

5. A clamping connector according to Claim 4, **characterised in that** the two clamping jaws (4, 5) consist of bent and, in particular, pressed sheet steel parts and **in that** they each have a strip-shaped clamping area (4c, 5c) which extends essentially over the whole width of.

6. A clamping connector according to any one of Claims 1 to 6, **characterized in that** the head (6a) of the tensioning screw is supported at sides (4b) which are narrowed in a central area.

## Revendications

1. Dispositif de serrage pour la connexion axiale de deux tuyaux, avec une gaine en caoutchouc (2) et un collier de serrage (3) entourant celle-ci, qui est pourvu à ses deux extrémités d'un dispositif de serrage (9) présentant une vis de serrage (6) qui traverse avec une partie filetée (6b) un trou transversal (8) du collier de serrage (3), dans lequel le dispositif de serrage (9) comporte deux mâchoires de serrage (4, 5), des pattes pliées (3c) du collier de serrage (3) s'engageant entre ces deux mâchoires de serrage (4, 5) et les mâchoires de serrage (4, 5) ayant en section transversale sensiblement une forme en U, **caractérisé en ce qu'**une portée filetée (7) pour la vis de serrage (6) est formée par déformation (4a, 5a) des flancs (4b, 5b) des mâchoires de serrage (4, 5).

2. Dispositif de serrage selon la revendication 1, **caractérisé en ce que** la portée filetée (7) est formée par matage.

3. Dispositif de serrage selon la revendication 1 ou 2, **caractérisé en ce que** la portée filetée (7) est constituée d'un trou de passage lisse dans une première mâchoire de serrage (4) et d'un trou fileté (10) dans l'autre mâchoire de serrage (5).

4. Dispositif de serrage selon l'une quelconque des revendications 1 à 3, **caractérisé en ce que** les deux pattes pliées (3c) présentent chacune, sensiblement en leur milieu, un trou de passage (8), qui est respectivement traversé par la vis de serrage (6).

5. Dispositif de serrage selon la revendication 4, **caractérisé en ce que** les deux mâchoires de serrage (4, 5) sont des pièces de tôle repliées et en particulier matées, et **en ce qu'**elles présentent chacune une région de serrage (4c, 5c) en forme de bande, qui s'étend essentiellement sur toute la largeur du collier de serrage (3).

6. Dispositif de serrage selon l'une quelconque des revendications 1 à 6, **caractérisé en ce que** la tête (6a) de la vis de serrage (6) est appuyée sur des flancs (4b) rétrécis en leur milieu.
